# EUROPEAN PATENT APPLICATION

(11) **EP 4 693 700 A1**
(43) Date of publication of application: **11.02.2026**
(21) Application number: 24777642.0
(22) Date of filing: 05.03.2024
(51) Int. Cl.: H01M 50/533, H01M 50/107, H01M 50/152

(54) **ELECTROCHEMICAL DEVICE AND ELECTRIC DEVICE**

(30) Priority: 27.03.2023 CN 202310307673
(71) Applicant: Ningde Amperex Technology Limited, Ningde, Fujian 352100 (CN)
(72) Inventor: JIANG, Nan, Ningde, Fujian 352100 (CN)
(74) Representative: Icosa
(86) International application number: PCT/CN2024/080095
(87) International publication number: WO 2024/198852

(57) **Abstract**

This application relates to the field of electrochemical apparatus technologies and discloses an electrochemical apparatus and an electric apparatus. The electrochemical apparatus includes a housing, an electrode assembly, an electrical connector, and a first conductive member. The housing includes a bottom housing and a housing cover, the bottom housing and the housing cover enclose a cavity, and the housing cover has a through hole communicating with the cavity. The electrode assembly is accommodated in the cavity. The electrical connector is disposed in the through hole through an insulation layer. The first conductive member includes a first conductive segment electrically connected to the electrode assembly and extending out of the electrode assembly, a second conductive segment bent towards a direction approaching the electrode assembly relative to the first conductive segment, and a third conductive segment that is bent towards a direction leaving the electrode assembly relative to the second conductive segment and electrically connected to the electrical connector. Viewed from a first direction, the second conductive segment and the third conductive segment are partially separated. In this way, the electrochemical apparatus provided in embodiments of this application can alleviate the incidence of tab breakage when the electrochemical apparatus falls, thereby extending the service life of the electrochemical apparatus.

## Description

### TECHNICAL FIELD

This application relates to the field of electrochemical apparatus technologies, and particularly, to an electrochemical apparatus and an electric apparatus.

### BACKGROUND

Button cells are widely used in various microelectronic products due to their compact size. In related arts, tabs are prone breakage when subjected to force in a case of falling of button cells, affecting the service life of the button cells.

### SUMMARY

This application is intended to provide an electrochemical apparatus and an electric apparatus, to alleviate incidence of tab breakage when an electrochemical apparatus falls, which affects the service life of the electrochemical apparatus.

This application provides an electrochemical apparatus including a housing, an electrode assembly, an electrical connector, and a first conductive member. The housing includes a bottom housing and a housing cover, the bottom housing and the housing cover enclose a cavity, and the housing cover has a through hole communicating with the cavity. The electrode assembly is accommodated in the cavity. The electrical connector is disposed in the through hole and is insulated from the housing. The first conductive member includes a first conductive segment electrically connected to the electrode assembly and extending out of the electrode assembly, a second conductive segment bent towards a direction approaching the electrode assembly relative to the first conductive segment, and a third conductive segment that is bent towards a direction leaving the electrode assembly relative to the second conductive segment and electrically connected to the electrical connector. Viewed from a first direction, the second conductive segment and the third conductive segment are partially separated. The first direction is a direction of opposite arrangement for the electrode assembly and the electrical connector.

In one or more/optional embodiments of the foregoing solution, the third conductive segment includes a first subsection and a second subsection. A first end portion of the first subsection is connected to the second end portion of the second conductive segment through the second bent portion. A second end portion of the first subsection is connected to the second subsection through a third bent portion. The second subsection is electrically connected to the electrical connector. Viewed from the first direction, the first end portion of the first subsection at least partially overlaps with the second conductive segment, and a projection of the second end portion of the first subsection is partially separated from a projection of the second conductive segment.

In one or more/optional embodiments of the foregoing solution, the first bent portion is located at a first end of the second conductive segment in the second direction, and the second bent portion is located at a second end of the second conductive segment in the second direction opposite to the first end, the second direction being perpendicular to the first direction.

In one or more/optional embodiments of the foregoing solution, length of the third conductive segment is L1, and length of the second conductive segment is L2, where L1 and L2 satisfy 0 < L1 < L2.

In one or more/optional embodiments of the foregoing solution, L1 and L2 satisfy 0.18 × L2 ≤ L1 < 0.37 × L2.

In one or more/optional embodiments of the foregoing solution, a virtual straight line crossing the second conductive segment and the first subsection is drawn in the first direction, length of a perpendicular line from a point at which the virtual straight line intersects with the second conductive segment to one end of the second conductive segment in a third direction is A1, length of a perpendicular line from a point at which the virtual straight line intersects with the second conductive segment to the other end of the second conductive segment in the third direction is A2, length of a perpendicular line from a point at which the virtual straight line intersects with the first subsection to one end of the first subsection in the third direction is A3, length of a perpendicular line from a point at which the virtual straight line intersects with the first subsection to the other end of the third conductive segment in the third direction is A4, and A1, A2, A3, and A4 satisfy |A1 - A2| ≠ |A3 - A4|, the third direction being perpendicular to the first direction.

In one or more/optional embodiments of the foregoing solution, a distance between the first end portion of the first subsection and the second end portion of the first subsection is L1, and a distance between the first end portion of the second conductive segment and the second end portion of the second conductive segment is L2, where L1 and L2 satisfy 0 < L2 < L1.

In one or more/optional embodiments of the foregoing solution, a surface of the second conductive segment facing towards the electrode assembly and a surface of the third conductive segment facing towards the electrical connector are both connected to the second bent portion.

In one or more/optional embodiments of the foregoing solution, viewed from the third direction, a shortest distance N1 between the second subsection and the electrode assembly in the first direction H and a shortest distance N2 between the second bent portion and the electrode assembly in the first direction H satisfy: 0 < N2 < N1, the third direction being perpendicular to the first direction.

In one or more/optional embodiments of the foregoing solution, viewed from the first direction, a shortest distance N3 between the first bent portion and a side wall of the bottom housing opposite to the first bent portion and a shortest distance N4 between the second bent portion and a side wall of the bottom housing opposite to the second bent portion satisfy: 0 < N4 < N3.

In one or more/optional embodiments of the foregoing solution, the second subsection has a connection zone connected to the electrical connector, and a projection of the connection zone in the first direction at least partially overlaps with the projection of the second conductive segment in the first direction.

In one or more/optional embodiments of the foregoing solution, the second subsection has a connection zone connected to the electrical connector, and a projection of the connection zone in the first direction at least partially overlaps with the projection of the second conductive segment in the first direction.

In one or more/optional embodiments of the foregoing solution, the electrode assembly is a wound electrode assembly, and viewed from the first direction, the second conductive segment overlaps with a winding center of the electrode assembly.

In one or more/optional embodiments of the foregoing solution, the electrode assembly is a wound electrode assembly, and viewed from the first direction, the first subsection overlaps with a winding center of the electrode assembly.

In one or more/optional embodiments of the foregoing solution, the electrode assembly is a wound electrode assembly, and viewed from the first direction, the second subsection overlaps with a winding center of the electrode assembly.

In one or more/optional embodiments of the foregoing solution, the electrode assembly is a wound electrode assembly, and viewed from the first direction, the second conductive segment, the first subsection, and the second subsection all overlap with the winding center of the electrode assembly.

In one or more/optional embodiments of the foregoing solution, a projection of the first conductive member in the first direction is at least partially located within a projection of the electrical connector in the first direction.

In one or more/optional embodiments of the foregoing solution, the electrochemical apparatus further includes a second conductive member, and the second conductive member is electrically connected to both the electrode assembly and the housing within the housing.

In one or more/optional embodiments of the foregoing solution, the electrical connector includes a body portion and a protruding portion, the body portion is connected to a surface of the housing cover facing towards the outside through the insulation layer, and the protruding portion penetrates into the through hole and extends into the through hole to be electrically connected to the third conductive segment.

In one or more/optional embodiments of the foregoing solution, the electrochemical apparatus further includes a first insulation member, and the first insulation member is attached to a surface of the third conductive segment facing towards the cavity. The third conductive segment has a connection zone connected to the electrical connector, where a projection of the connection zone in the first direction is located within a projection of the first insulation member in the first direction.

In one or more/optional embodiments of the foregoing solution, the electrochemical apparatus further includes a second insulation member, and the second insulation member covers a surface of the first conductive member.

In one or more/optional embodiments of the foregoing solution, the insulation layer is disposed around the through hole, and in the first direction, a projection of the insulation layer in the first direction is larger than the projection of the first conductive member in the first direction.

This application further provides an electric apparatus including the foregoing electrochemical apparatus.

With reference to the accompanying drawings, the above and other features and effects of this application will be further understood from the following description of some embodiments of this application.

### BRIEF DESCRIPTION OF DRAWINGS

One or more embodiments are used as examples for description by using corresponding accompanying drawings. These example descriptions impose no limitation on some embodiments. Elements with a same reference sign in the accompanying drawings represent similar elements. Unless otherwise stated, the figures in the accompanying drawings impose no limitation on a scale.
FIG. 1 is a schematic structural diagram of a first electrochemical apparatus according to some embodiments of this application;
FIG. 2 is a structural exploded view of the electrochemical apparatus shown in FIG. 1;
FIG. 3 is a schematic structural diagram of the electrochemical apparatus shown in FIG. 1 in a second direction, where the electrochemical apparatus is not equipped with a housing cover;
FIG. 4 is a schematic structural diagram of the electrochemical apparatus shown in FIG. 1 in a first direction, where arrangement locations of an insulation layer, an electrical connector, and a first conductive member are shown;
FIG. 5 is a cross-sectional diagram of the electrochemical apparatus in FIG. 4 along line A-A;
FIG. 6 is a locally enlarged view of position A of the electrochemical apparatus in FIG. 5;
FIG. 7 is a locally enlarged view of position B of the electrochemical apparatus in FIG. 5;
FIG. 8 is another schematic structural diagram of the electrochemical apparatus shown in FIG. 1 in a first direction;
FIG. 9 is a schematic structural diagram of the electrochemical apparatus shown in FIG. 1 equipped with an external conductive member;
FIG. 10 is a schematic structural diagram of a second electrochemical apparatus according to some embodiments of this application;
FIG. 11 is a cross-sectional diagram of the electrochemical apparatus in FIG. 10 along line B-B;
FIG. 12 is a schematic structural diagram of a third electrochemical apparatus according to some embodiments of this application;
FIG. 13 is a cross-sectional diagram of the electrochemical apparatus in FIG. 12 along line C-C;
FIG. 14 is a schematic structural diagram of a fourth electrochemical apparatus according to some embodiments of this application;
FIG. 15 is a cross-sectional diagram of the electrochemical apparatus in FIG. 14 along line D-D;
FIG. 16 is a schematic structural diagram of a fifth electrochemical apparatus according to some embodiments of this application;
FIG. 17 is a schematic structural diagram of the electrochemical apparatus shown in FIG. 16 in a first direction;
FIG. 18 is a cross-sectional diagram of the electrochemical apparatus in FIG. 16 along line A'-A'; and
FIG. 19 is a schematic block diagram of an electric apparatus according to some embodiments of this application.

### DESCRIPTION OF EMBODIMENTS

To make the objectives, technical solutions, and advantages of some embodiments of this application clearer, the following clearly describes the technical solutions in some embodiments of this application with reference to the accompanying drawings in some embodiments of this application. Apparently, these embodiments described are some rather than all embodiments of this application.

In the specification, claims, or accompanying drawings of this application, the terms "first", "second", and the like are intended to distinguish between different objects rather than to indicate a particular order or relative importance. In some embodiments of this application, like reference signs denote like components, and for brevity, in different embodiments, detailed descriptions of like components are not repeated.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mounting", "connection", and the like should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "parallel" in some embodiments of this application not only includes the absolutely parallel case, but also includes the approximately parallel case in the conventional understanding of engineering; likewise, the term "perpendicular" not only includes the absolutely perpendicular case, but also includes the approximately perpendicular case in the conventional understanding of engineering. For example, two directions may be considered to be perpendicular if an included angle between the two directions is 80°-90°, and two directions may be considered to be parallel if the included angle between the two directions is 0°-10°.

As described in the background, in related arts, tabs are prone to breakage when subjected to force in a case of falling of button cells fall, affecting the service life of the button cell. Specifically, to ensure that a tab can be stably connected to a pole on a housing cover, the tab is usually left with redundant length. However, due to the compact internal structure of button cells, when the housing cover fits the bottom housing to pack an electrode assembly, it is likely that the housing cover exerts a force on the tab, making the tab prone to wrinkle. When an electrochemical apparatus falls, these wrinkles may become weak zones of stress in the tab and easily break, affecting the service life of the electrochemical apparatus.

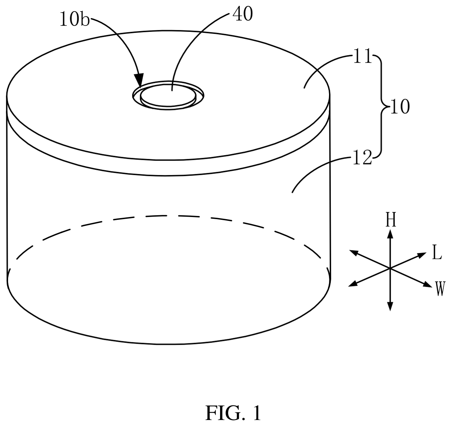

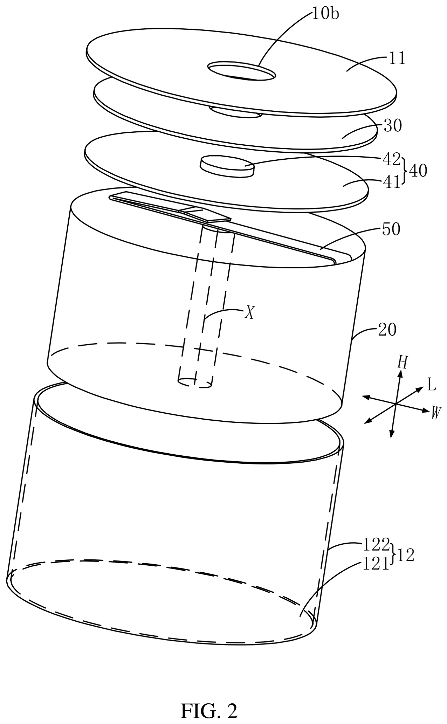

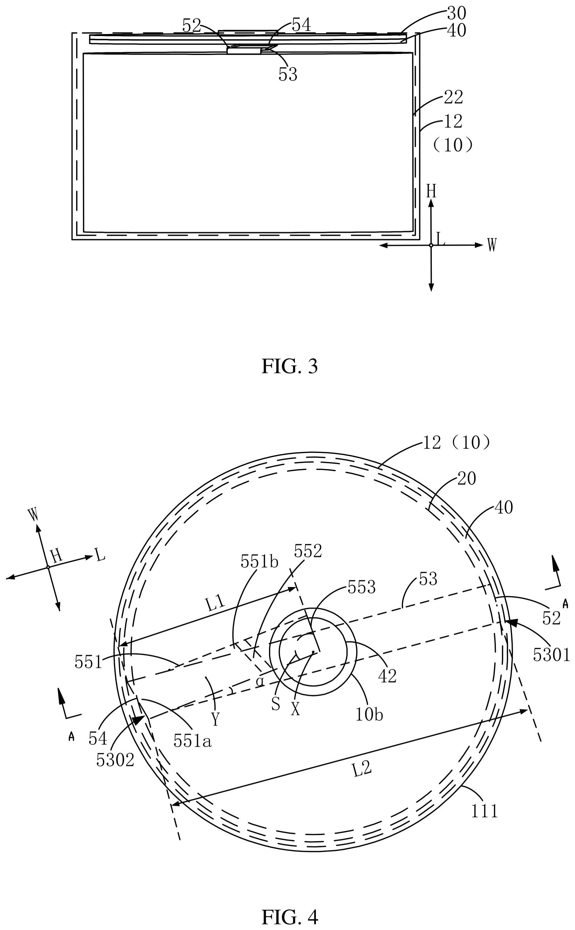

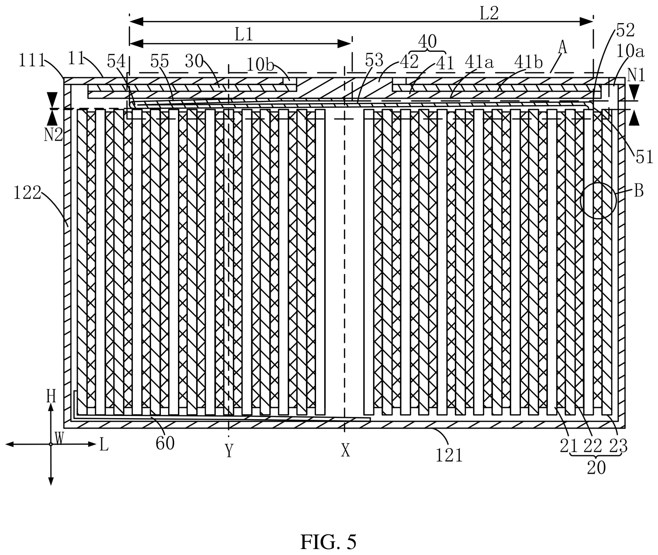

Therefore, this application provides an electrochemical apparatus. Referring to FIGs. 4 and 5 together with examples in FIG. 1 or FIG. 2, FIG. 1 is a schematic structural diagram of an electrochemical apparatus according to an embodiment of this application; FIG. 2 is a structural exploded view of the electrochemical apparatus shown in FIG. 1; FIG. 4 is a schematic diagram of an internal structure of the electrochemical apparatus shown in FIG. 1 in a first direction H; and FIG. 5 is a cross-sectional view of FIG. 4 along line A-A. The electrochemical apparatus includes a housing 10, an electrode assembly 20, an electrical connector 40, a first conductive member 50, and a second conductive member 60. The housing 10 has a cavity 10a and a through hole 10b that communicates the cavity 10a with an external environment. The electrical connector 40 is disposed on a surface 41b of the housing cover 11 of the housing 10 opposite to the electrode assembly 20 in the first direction H. The electrode assembly 20 is accommodated in the cavity 10a. The first conductive member 50 is connected to both the electrical connector 40 and one electrode plate of the electrode assembly 20. The second conductive member 60 is connected to both the housing 10 and the other electrode plate of the electrode assembly 20. As a result, the electrical connector 40 and the housing 10 both become connection terminals of the electrochemical apparatus for connecting to external devices such as electric apparatuses or power supply apparatuses. In addition, the electrochemical apparatus further includes an electrolyte accommodated in the cavity 10a, and the electrode assembly 20 can be immersed in the electrolyte. It can be understood that the housing 10 may not serve as a connection terminal of the electrochemical apparatus. For example, in some other embodiments of this application, the second conductive member 60 may directly extend out of the housing 10 to form a connection terminal for connecting to the foregoing external device; or an additional electrical connector 40 may be added to the housing 10 to electrically connect to the second conductive member 60 so as to form a connection terminal for connecting to the foregoing external device.

For ease of description, the coordinate systems in FIGs. 1 and 2 are used to define directions. Coordinate axis H represents the first direction, which is a direction of opposite arrangement for the electrode assembly 20 and the electrical connector 40. Coordinate axis L represents a second direction, which is an extension direction of the first conductive member 50. Coordinate axis W represents a third direction, and any two of the third direction W, the second direction L, and the first direction H are perpendicular to each other.

Based on the foregoing orientation definition, next, the specific construction of the housing 10, the electrode assembly 20, the electrical connector 40, the first conductive member 50, and the second conductive member 60 will be described with reference to some embodiments illustrated in the drawings. The nouns that represent directions or positional relationships, such as "up", "down", "top", and "bottom" used below are all relative to the first direction H. In addition, in the case of no conflict, the technical features involved in different embodiments of this application described below can be combined with each other.

For the housing 10, still refer to the example shown in FIG. 2. In some embodiments of this application, the housing 10 includes the housing cover 11 and a bottom housing 12. The bottom housing 12 is a cavity structure with the top open, and has a bottom wall 121 that is circular when viewed in the first direction H and a side wall 122 connected to a periphery of the bottom wall 121. The housing cover 11 may be a plate-like structure, and has an edge 111 that is circular when viewed in the first direction H and a through hole 10b located at the middle of the housing cover 11. The housing cover 11 may be connected and fixed to a top surface of the side wall 122 of the bottom housing, so that the housing cover 11 and the bottom housing 12 together define the cavity 10a of the housing 10. For example, the circular edge 111 of the housing cover 11 may be connected and fixed to the top surface of the side wall 122 of the bottom housing by methods including but not limited to laser welding, conductive glue bonding, or rivet riveting. In some other embodiments of this application, the through hole 10b is not specifically limited to being only at the middle of the housing cover 11, or may be provided at the circular edge of the housing cover 11 based on actual usage needs, or the through hole 10b may be provided on the bottom housing 12. In addition, some embodiments of this application do not specifically limit the shape of the housing 10, and the shape of the housing 10 may be adaptively adjusted based on actual usage needs. For example, the shape of the housing 10 may be a cuboid, an elliptical cylinder, or a prism.

For example, the housing 10 may be made of a metal material such as steel alloy, iron alloy, or ferrocarbon alloy that is resistant to electrolytic corrosion, thereby alleviating leakage caused by the electrolyte in the cavity 10a corroding the housing 10 for a long time. It can be understood that the housing 10 is not limited to being made of the foregoing metal materials that are resistant to electrolytic corrosion. For example, in some other embodiments of this application, if the housing 10 still serves as a connection terminal of the electrochemical apparatus, one of the housing cover 11 and the bottom housing 12 may still be made of a metal material such as steel alloy, iron alloy, or ferrocarbon alloy that is resistant to electrolytic corrosion, so that it is electrically connected to the second conductive member 60. The other one of the two can be made of a non-metal material such as plastic or ceramics that is resistant to electrolytic corrosion. For another example, in some other embodiments of this application, the housing 10 may not serve as a connection terminal of the electrochemical apparatus, and the housing 10 may be made of a non-metal material such as plastic or ceramics that is resistant to electrolytic corrosion.

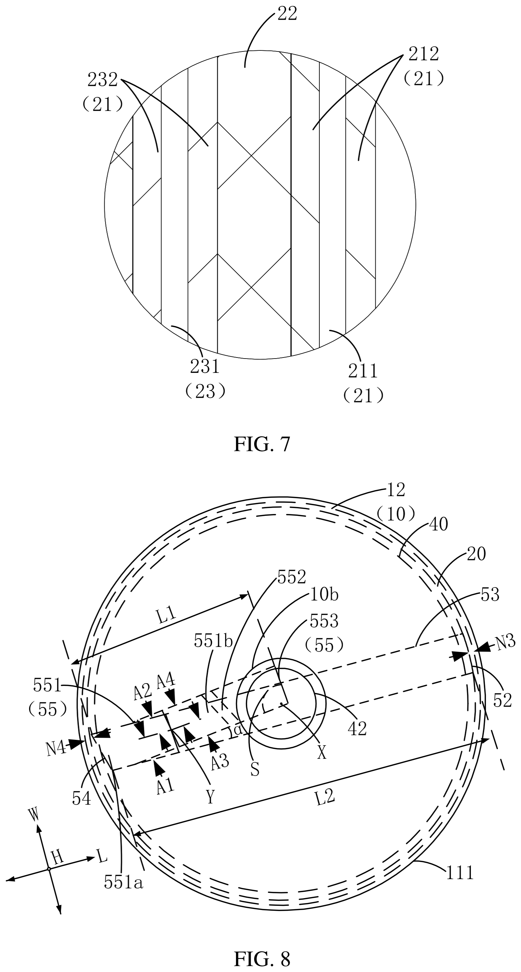

For the electrode assembly 20, refer to FIGs. 5 and 7 and together with the example in FIG. 2. FIG. 7 is a locally enlarged view of position B in FIG. 5. In some embodiments of this application, the electrode assembly 20 includes a first electrode plate 21 and a second electrode plate 23 of opposite polarities. The first electrode plate 21 includes a first current collector 211 and first active material layers 212 applied on two opposite surfaces of the first current collector 211. The second electrode plate 23 includes a second current collector 231 and second active material layers 232 applied on two opposite surfaces of the second current collector 231. A separator 22 is sandwiched between one first active material layer 212 and one second active material layer 232. The first electrode plate 21, the separator 22, and the second electrode plate 23 are stacked in sequence and wound around a winding center axis X to form a cylindrical wound structure, which is accommodated in the cavity 10a of the housing 10. The winding center axis X of the cylindrical wound structure roughly coincides with a center axis of the through hole 10b on the housing cover 11. It should be noted herein that because the winding center axis X of the cylindrical wound structure roughly coincides with the center axis of the through hole 10b on the housing cover 11, it means that the winding center axis X of the cylindrical wound structure can also be the first direction H of the electrochemical apparatus. It can be understood that the specific construction of the electrode assembly 20 is actually diverse. For example, in some other embodiments of this application, the electrode assembly 20 may be a stacked structure formed by stacking multiple first electrode plates 21 and multiple second electrode plates 23 in an alternating manner and sandwiching one separator 22 between any two adjacent electrode plates, where a stacking direction of the stacked structure is roughly perpendicular to the center axis X of the through hole 10b on the housing cover 11. For another example, in some other embodiments of this application, the electrode assembly 20 may be a wound structure formed by winding a composite electrode plate, and the composite electrode plate is formed by applying an active material layer on a composite current collector.

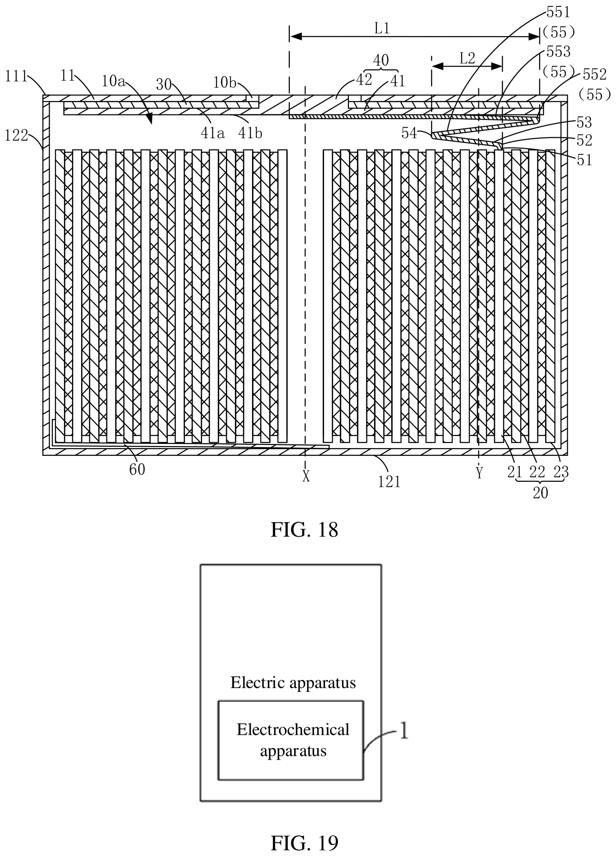

It can also be understood that some embodiments of this application do not specifically limit a polarity of the electrical connector 40 and the housing 10. For example, in some embodiments of this application, the first electrode plate 21 is a positive electrode plate, and in this case, the electrical connector 40 can serve as a positive connection terminal of the electrochemical apparatus, the second electrode plate 23 is a negative electrode plate, and the housing 10 can serve as a negative connection terminal of the electrochemical apparatus. For another example, in some embodiments of this application, the first electrode plate 21 is a negative electrode plate, and in this case, the electrical connector 40 can serve as a negative connection terminal of the electrochemical apparatus, the second electrode plate 23 is a positive electrode plate, and the housing 10 can serve as a positive connection terminal of the electrochemical apparatus. For simplicity of description, the first electrode plate 21 being a positive electrode plate and the second electrode plate 23 being a negative electrode plate are used as an example for description. The first current collector 211 may be at least one of Ni, Ti, Cu, Ag, Au, Pt, Fe, Co, Cr, W, Mo, Al, Mg, K, Na, Ca, Sr, Ba, Si, Ge, Sb, Pb, In, Zn and a combination (alloy) thereof. For example, the first current collector 211 may be made of copper foil. The first active material layer 212 may include but is not limited to lithium metal oxide such as LiNi_{1/3}Mn_{1/3}Co_{1/3}O₂, LiCoO₂, LiNiO₂, LiMn₂O₄, LiCoMnO₄, and Li₂NiMn₃O₈, or lithium metal phosphate such as LiFePO₄, LiMnPO₄, LiNiPO₄, LiCoPO₄, Li₃Fe₂(PO₄)₃, and Li₃V₂(PO₄)₃. Still referring to FIG. 5, in some embodiments of this application, a blank foil zone of the first current collector 211 at an outermost ring of the cylindrical wound structure is electrically connected to the first conductive member 50. The second electrode plate 23 being a negative electrode plate is used as an example for description, where the second current collector 231 may be at least one of Ni, Ti, Cu, Ag, Au, Pt, Fe, Co, Cr, W, Mo, Al, Mg, K, Na, Ca, Sr, Ba, Si, Ge, Sb, Pb, In, Zn, and a combination (alloy) thereof. For example, the second current collector 231 may be made of aluminum foil. The second active material layer 232 may include but is not limited to carbon material such as graphite and hard carbon, or Si, Si alloy, and Li₄Ti₅O₁₂. Still referring to FIG. 5, in some embodiments of this application, a blank foil zone of the second current collector 231 at an outermost ring of the cylindrical wound structure is electrically connected to the second conductive member 60. It can still be understood that the first conductive member 50 is not connected only to the first current collector 211 at the outermost ring of the cylindrical wound structure. For example, in some embodiments, not limited only to those shown in FIG. 18, the first conductive member 50 is connected to the first current collector of the cylindrical wound structure close to the winding center X, that is, the first conductive member 50 may be connected to a part of the first current collector 211 closer to the winding center axis X than the outermost ring of the cylindrical wound structure. Similarly, whether the second conductive member 60 is connected to the second current collector 231 at the outermost ring of the cylindrical wound structure is not specifically limited herein, and the second conductive member 50 may alternatively be connected to a part of the second current collector 231 closer to the winding center axis X than the outermost ring of the cylindrical wound structure.

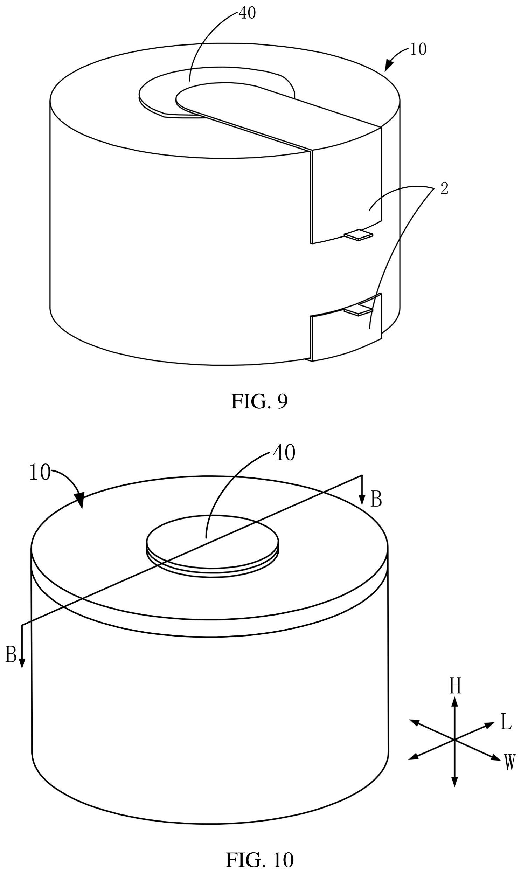

For the electrical connector 40, still refer to FIG. 2 together with the example in FIG. 5. In some embodiments of this application, the electrical connector 40 includes a body 41 and a protruding portion 42. The body 41 has a first surface 41a and a second surface 41b disposed opposite in the first direction H. The first surface 41a is electrically connected to the first conductive member 50, and the second surface 41b is connected and fixed to the housing cover 11 through an insulation layer 30. For example, the insulation layer 30 is an insulation sealing adhesive, and the insulation sealing adhesive is disposed around the protruding portion 42, so that the second surface 41b of the body can be adhered and fixed to a surface of the housing cover 11 facing towards the cavity 10a through the insulation sealing adhesive, and the electrical connector 40, the insulation layer 30 and the housing 10 can jointly seal the cavity 10a of the housing 10. The protruding portion 42 is integrally connected to the second surface 41b, the protruding portion 42 may penetrate through the through hole 10b on the housing cover 11 and extend out of the through hole 10b, and an end surface of the protruding portion 42 extending out of the through hole 10b is used for electrically connecting to an external conductive member 2. For example, as shown in FIG. 9, in some other embodiments of this application, the first surface 41a of the body may be welded and fixed with an external conductive member 22, and a surface of the external conductive member 22 may be coated with an insulation adhesive paper (not shown), so that the external conductive member 2 can be fitted to an outer surface of the housing cover 11 and bent to extend to an outer peripheral wall of the bottom housing 12, so that the electrochemical apparatus and the external conductive member 2 together form a packed battery structure, thus reducing the space occupied by the packed battery structure as much as possible.

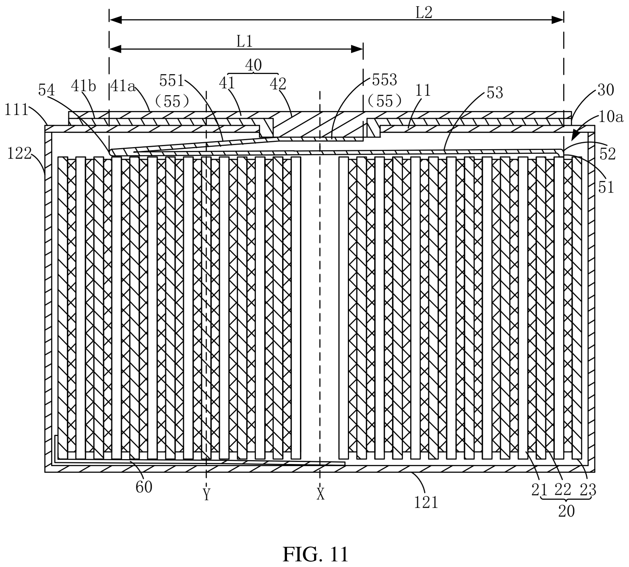

It can be understood that the electrical connector 40 is not limited to being connected and fixed to the housing cover 11 in the foregoing form. For example, refer to the examples in FIG. 10 and FIG. 11. In some other embodiments of this application, the first surface 41a of the body may be used for electrically connecting to an external conductive member 22, and the second surface 41b of the body may be connected and fixed to the housing cover 11 through an insulation layer 30. For example, the insulation layer 30 is an insulation sealing adhesive, and the insulation sealing adhesive is disposed around the protruding portion 42, so that the second surface 41b of the body 41 can be adhered and fixed to a surface of the housing cover 11 facing towards the outside through the insulation sealing adhesive, and the electrical connector 40, the insulation layer 30, and the housing 10 can jointly seal the cavity 10a of the housing 10. The protruding portion 42 is integrally connected to the second surface 41b, and the protruding portion 42 may be electrically connected to the first conductive member 50.

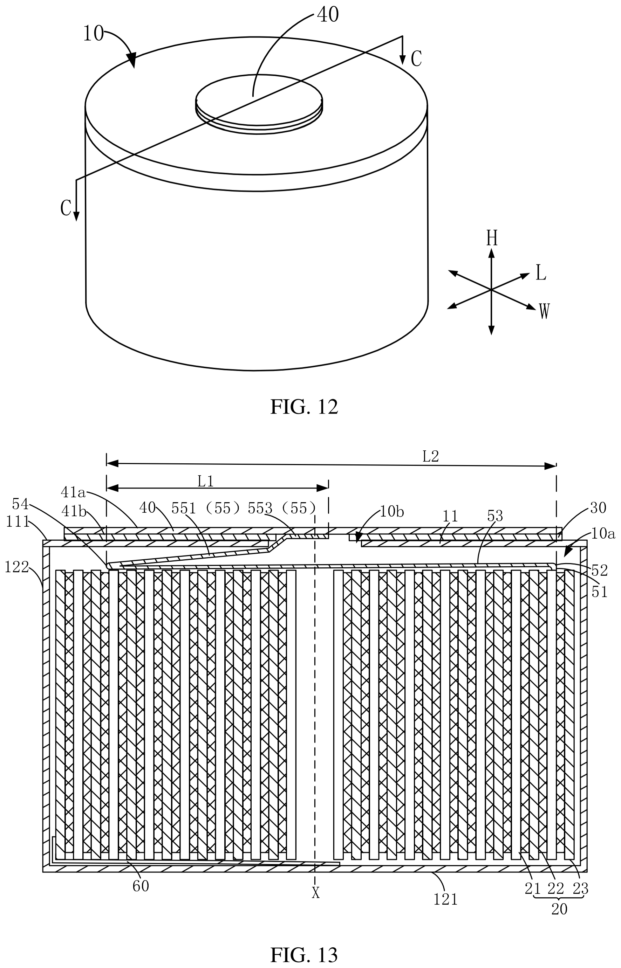

Alternatively, refer to examples in FIG. 12 and FIG. 13. In some other embodiments of this application, the electrical connector 40 may alternatively be substantially a plate-like structure, and its second surface 41b can still be adhered and fixed to a surface of the housing cover 11 of the housing 10 facing towards the outside through an insulation sealing adhesive but is not limited thereto. The first surface 41a of the electrical connector is used for electrically connecting to an external conductive member 2, and a zone of the electrical connector 40 exposed at the through hole 10b is electrically connected to the first conductive member 50.

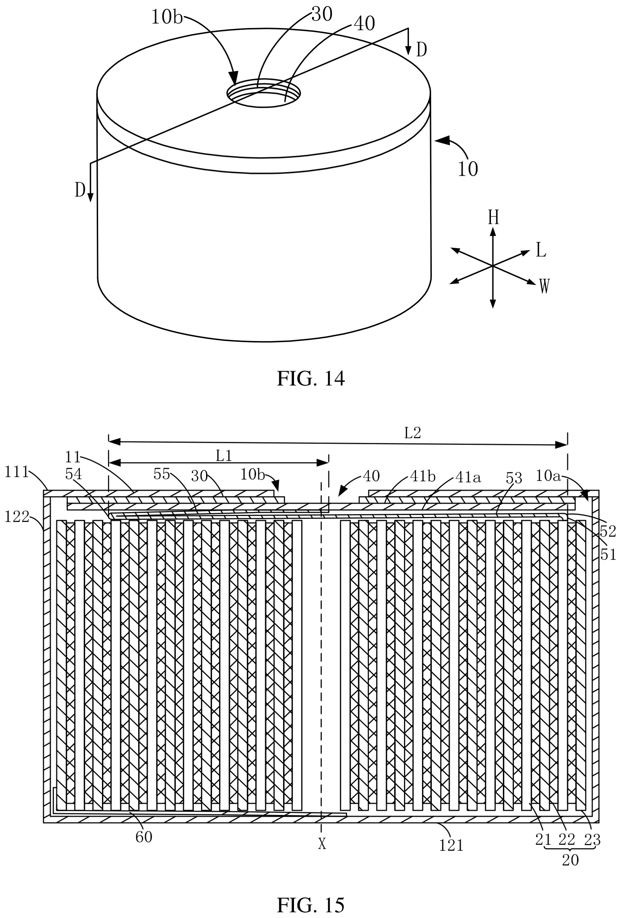

Alternatively, refer to examples in FIGs. 14 and 15. In some other embodiments of this application, the electrical connector 40 may be substantially a plate-like structure. The second surface 41b of the electrical connector 40 may be fixed to a surface of the housing cover 11 facing towards the cavity 10a through an insulation sealing adhesive but is not limited thereto. A zone of the electrical connector 40 exposed at the through hole 10b is used for electrically connecting to an external conductive member 2, and the first surface 41a of the electrical connector 40 is electrically connected to the first conductive member 50.

It should be noted that in the foregoing embodiments, an area of a projection of the insulation layer 30 in the first direction H is larger than an area of a projection of the second surface 41b of the body portion 41 in the first direction H. This can reduce the occurrence of a short circuit between an edge of the electrical connector 40 of the electrochemical apparatus and the housing cover 11.

In some embodiments of this application, the electrical connector 50 may be made of at least one of Ni, Ti, Cu, Ag, Au, Pt, Fe, Co, Cr, W, Mo, Al, Mg, K, Na, Ca, Sr, Ba, Si, Ge, Sb, Pb, In, Zn, and a combination (alloy) thereof. For example, the electrical connector can be made of aluminum foil.

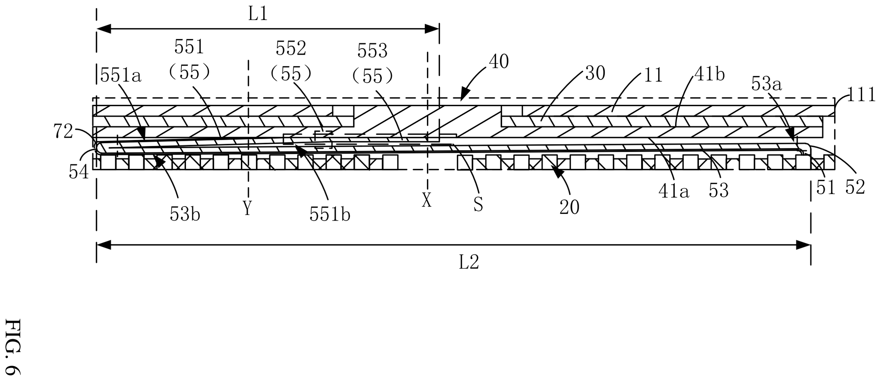

For the first conductive member 50, refer to FIGs. 3 and 6 as well as the example in FIG. 4. In some embodiments of this application, the first conductive member 50 includes a first conductive segment 51, a second conductive segment 53, and a third conductive segment 55. A first end portion of the first conductive segment 51 is electrically connected to a blank foil zone of the first current collector 211 at the outermost ring of the cylindrical wound structure. Observed from the second direction L, a second end portion of the first conductive segment 51 extends out of the top of the cylindrical wound structure in the first direction H. A first end portion 53a of the second conductive segment 53 is connected to the second end portion of the first conductive segment 51 through a first bent portion 52. The second conductive segment 53 extends from an edge of the cylindrical wound structure towards the winding center X of the cylindrical wound structure. The direction from the edge of the cylindrical wound structure towards the winding center of the cylindrical wound structure of the second conductive segment 53 is the extension direction L of the first conductive member 50. The first bent portion 52 is formed by bending an end of the first bent portion 52 connected to the second conductive segment 53 towards a direction approaching the cylindrical wound structure. The third conductive segment 55 includes a first subsection 551 and a second subsection 553. A first end portion 551a of the first subsection 551 is connected to a second end portion 53b of the second conductive segment through a second bent portion 54. The first subsection 551 extends from the center X of the cylindrical wound structure towards the edge of the cylindrical wound structure. The second bent portion 54 is formed by bending an end of the second bent portion 54 connected to the first subsection 551 towards a direction leaving the cylindrical wound structure. The second subsection 553 is electrically connected to an end surface of the protruding portion 42 of the electrical connector 40 extending into the through hole 10b, and the second subsection 553 is connected to an end of the first subsection 551 away from the second bent portion 54 through a third bent portion 552. The third bent portion 552 is formed by bending an end of the third bent portion 552 connected to the second subsection 553 towards a direction leaving the cylindrical wound structure. Observed from the first direction H, the second conductive segment 53 and the third conductive segment 55 are partially separated. Specifically, observed from the first direction H, a projection of the second conductive segment 53 is partially separated from a projection of the third conductive segment 55. An extension direction of the second conductive segment 53 is different from an extension direction of the third conductive segment 55. For example, as shown in FIGs. 4, 8, and 17, an included angle α between the extension direction of the second conductive segment 53 and the extension direction of the third conductive segment 55 satisfies 0 < α ≤ 90°.

In some embodiments of this application, the first conductive segment 51, the second conductive segment 53, and the third conductive segment 55 of the first conductive member 50 are all pre-bent and then separately connected and fixed to the electrode assembly 20 and the electrical connector 40. The advantage of such disposition is that it can not only reduce the redundant length of the first conductive member 50, but also enhance the connection reliability of the housing cover 11 and the bottom housing 12 because the overall first conductive member 50 is in a contracted state due to the presence of these bent portions, thereby prolonging the service life of the electrochemical apparatus. In some embodiments of this application, the first conductive member 50 may be made of at least one of Ni, Ti, Cu, Ag, Au, Pt, Fe, Co, Cr, W, Mo, Al, Mg, K, Na, Ca, Sr, Ba, Si, Ge, Sb, Pb, In, Zn, and a combination (alloy) thereof. For example, the first conductive member 50 may be made of the same aluminum foil as the electrical connector 40.

In some embodiments of this application, a projection of the first subsection 551 in the first direction H is partially separated from the projection of the second conductive segment 53 in the first direction H. For example, as shown in FIG. 4, 8, or 17, the first subsection 551 is connected to the second conductive segment 53 through the second bent portion 54, and the first subsection 551 is connected to the third subsection 553 through the third bent portion 552. The first subsection 551 includes a first end portion 551a connected to the second bent portion 54 and a second end portion 551b connected to the third bent portion 552. Observed from the first direction H, the first end portion 551a of the first subsection 551 at least partially overlaps with the second conductive segment 53. Observed from the first direction H, a projection of the second end portion 551b of the first subsection 551 is partially separated from a projection of the second conductive segment 53. That observed from the first direction H, a projection of the second end portion 551b of the first subsection 551 is partially separated from a projection of the second conductive segment 53 specifically means that the projection of the second end portion 551b of the first subsection 551 in the first direction H is partially separated from the projection of the second conductive segment 53 in the first direction H. In this way, the second conductive segment 53 and the first subsection 551 partially overlaps, reducing the area occupied by the first conductive member 50 in the first direction H, thereby reducing the risk of short circuits between the second current collector 231 of the electrode assembly 20 and the first conductive member 50 when the electrochemical apparatus wildly moves. In addition, as compared with the case that neither the first end portion 551a nor the second end portion 551b of the first subsection 551 is separated from the second conductive segment 53, under the fixing action of the housing cover 11 and the bottom housing 12, the first subsection 551 can abut against the second conductive segment 53, so that a force point can be formed at a contact part between the second conductive segment 53 and the first subsection 551 to disperse the force acting on the second bent portion 54, thereby enhancing the connection strength of the second bent portion 54. On the other hand, because the second end portion 551b of the first subsection 551 is separated from the second conductive segment 53 in the first direction H, compared with other parts of the first conductive member 50 that have a larger distance in the first direction H, the first bent portion 52, the second bent portion 54, and the third bent portion 552 can be respectively arranged in different zones between the housing cover 11 and the electrode assembly 20, thereby improving the energy density of the electrochemical apparatus. In addition, the third conductive segment 55 and the second conductive segment 53 are partially separated in the first direction H, thereby suppressing the shortening of life due to friction during product use.

Still as shown in FIG. 4, in some embodiments of this application, the second bent portion 54 is located at a first end 5301 of the second conductive segment 53 in the second direction L, and the first bent portion 52 is located at a second end 5302 of the second conductive segment 53 in the second direction L, which is opposite to the first end 5301. Observed from the first direction H, the second conductive segment 53 extends from the edge of the cylindrical wound structure towards the winding center X of the cylindrical wound structure, and after exceeding the winding center X of the cylindrical wound structure, extends to the edge on the opposite side of the junction of the cylindrical wound structure and the first conductive segment 51. In this way, the first bent portion 52 and the second bent portion 54 are located on different sides of the cylindrical wound structure, that is, there is a gap between the first bent portion 52 and the second bent portion 54 to accommodate the winding center degree of the electrode assembly. This can reduce the incidence of being unable to bend or severe bending deformation caused by the small gap between the first bent portion 52 and the second bent portion 54.

Still as shown in FIG. 4, in some embodiments of this application, the length of the third conductive segment 55 is L1, the length of the second conductive segment 53 is L2, and L1 and L2 satisfy 0 < L1 < L2. This can increase the length of the second conductive segment 53 and the first subsection 551 so that there is still a redundancy after the second subsection 553 is connected and fixed to the protruding portion 42 of the electrical connector 40, to cope with an error generated in mechanical processing of the first conductive member 50 and the electrical connector 40. In addition, because L2 is greater than L1, when the electrode assembly 20 of the electrochemical apparatus wildly moves, the longer second conductive segment 53 can swing with a smaller amplitude with the wild movement of the electrode assembly, thereby reducing a force applied to a stress weak zone of the first bent portion 52, and thus enhancing the connection strength of the first bent portion 52.

In some embodiments of this application, 0.18 × L2 ≤ L1 < 0.37 × L2. L1 < 0.18 × L2 means that the first subsection 551 is prone to come into contact with the protruding portion 42 of the electrical connector, causing material degradation. L1 > 0.37 × L2 means that the second bent portion 54 has a small gap to the side wall 122 of the bottom housing and is prone to come into contact with the side wall 122 of the bottom housing, causing material degradation. Therefore, L1 in this numerical range helps to pre-fold the second conductive segment 53 and the first conductive segment 51, and can maintain a proper gap between the second bent portion 54 and an inner peripheral wall of the bottom housing 12.

As shown in FIG. 8, in some embodiments of this application, a virtual straight line Y crossing the second conductive segment 53 and the first subsection 551 is drawn in the first direction H. A length of a perpendicular line from a point at which the virtual straight line Y intersects with the second conductive segment 53 to one end of the second conductive segment 53 in the third direction W is A1, a length of a perpendicular line from a point at which the virtual straight line Y intersects with the second conductive segment 53 to the other end of the second conductive segment 53 in the third direction W is A2, a length of a perpendicular line from a point at which the virtual straight line Y intersects with the first subsection 551 to one end of the first subsection 551 in the third direction W is A3, and a length of a perpendicular line from a point at which the virtual straight line Y intersects with the first subsection 551 to the other end of the first subsection 551 in the third direction W is A4. A1, A2, A3, and A4 satisfy: |A1 - A2| ≠ |A3 - A4|. This point will be described later with reference to drum drop tests of the electrochemical apparatus.

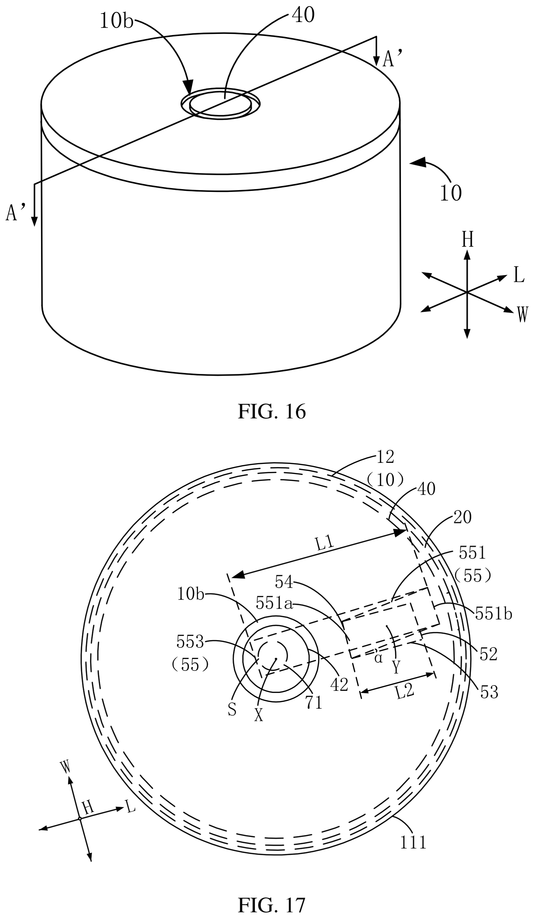

Alternatively, refer to the examples shown in FIGs. 16 to 18. The difference from the foregoing embodiments of this application is that the first conductive member 50 can extend out from a part of the cylindrical wound structure close to the winding center, and the first conductive member 50 is connected in a bent form different from those in the foregoing embodiments of this application. In some embodiments of this application, 0 < L2 < L1. That is, there is a large gap between the third bent portion 552 and the second bent portion 54. This reduces incidence of being unable to bend or severe bending deformation caused by being unable to compress materials at a small gap between the third bent portion 552 and the second bent portion 54.

As shown in FIG. 6, in some embodiments of this application, a surface of the second conductive segment 53 facing towards the electrode assembly 20 and a surface of the first subsection 551 of the third conductive segment 55 facing towards the electrical connector 40 are both connected to the second bent portion 54.

As shown in FIG. 5, in some embodiments of this application, viewed from a third direction W, a shortest distance N1 between the second subsection 553 and the electrode assembly 20 in the first direction H and a shortest distance N2 between the second bent portion 54 and the electrode assembly 20 in the first direction H satisfy 0 < N2 < N1. This setting helps to reduce squeezing of the bottom housing 12 by the second bent portion 54, and reduce the risk of a decrease in the welding strength between the bottom housing 12 and the housing cover 11.

As shown in FIG. 8, in some embodiments of this application, a shortest distance N3 between the first bent portion 52 and the side wall 122 of the bottom housing 12 opposite to the first bent portion 52 and a shortest distance N4 between the second bent portion 54 and the side wall 122 of the bottom housing 12 opposite to the second bent portion 54 satisfy 0 < N3 < N4. This helps to reduce squeezing of the bottom housing 12 by the second bent portion 54, and reduce the risk of a decrease in the welding strength between the bottom housing 12 and the housing cover 11.

As shown in FIG. 4, in some embodiments of this application, the second subsection 553 has a connection zone S connected to the electrical connector 40. A projection of the connection zone S in the first direction H at least partially overlaps with a projection of the second conductive segment 53 in the first direction H. Further, observed from the first direction H, the connection zone S may overlap with the center X of the electrode assembly 20. This helps to reduce a stress applied on the second bent portion 54 and improve the service life of the electrochemical apparatus.

In some embodiments of this application, observed from the first direction H, the second conductive segment 53 overlaps with the winding center X of the electrode assembly 20, and the third conductive segment 55 may be separated from the center X of the electrode assembly 20. This disposition helps to improve heat dissipation effects of the second conductive segment 53 and the third conductive segment 55.

In some embodiments of this application, observed from the first direction H, the first subsection 551 overlaps with the center X of the electrode assembly 20, and the second conductive segment 53 may be separated from the center X of the electrode assembly 20. This disposition helps to improve heat dissipation effects of the second conductive segment 53 and the third conductive segment 55.

In some embodiments of this application, observed from the first direction H, the second conductive segment 53, the first subsection 551, and the second subsection 553 all coincide with the winding center X of the electrode assembly 20.

To improve the service life of the electrochemical apparatus, especially when the second subsection 553 is welded and fixed to the end surface of the protruding portion 42 extending into the through hole 10b, the risk of short circuits within the electrode assembly 20 caused by welding slags produced in welding falling into the electrode assembly 20 and piercing the separator 22 is reduced. Still as shown in FIG. 6, in some embodiments of this application, the first insulation member 71 may be attached to a surface of the second subsection 553 facing towards the cavity 10a. A projection of the foregoing connection zone in the first direction H is located within a projection of the first insulation member 71 in the first direction H. In this way, the first insulation member 71 can prevent welding slags produced by a weld part of the second subsection 553 and the protruding portion 42 of the electrical connector 40 from falling into the electrode assembly 20, and wear caused by friction between the third conductive segment 55 and the second subsection 553 under the action of an external force to maintain the current passing capability of the first conductive member 50. For example, the first insulation member 71 is insulation adhesive paper.

Still as shown in FIG. 6, in some embodiments of this application, an outer surface of each part of the first conductive member 50 is covered with a second insulation member 72. This can reduce the case that the first conductive member 50 come into direct contact with the housing cover 11 of the housing 10, the bottom housing 12 of the housing 10, and the second electrode plate 23 of the electrode assembly 20, while such contact causes a short circuit inside the electrochemical apparatus. For example, the second insulation member 72 may be insulation adhesive paper.

As shown in FIG. 4, in some embodiments of this application, when observed in the first direction H, the projection of the first conductive member 50 in the first direction H is at least partially located within the projection of the electrical connector 40 in the first direction H.

For the second conductive member 60, still refer to the example shown in FIG. 5. In the embodiment of this application, one end of the second conductive member 60 may be electrically connected to a blank foil zone of the second electrode plate 23 at the outermost ring of the cylindrical wound structure, and the other end of the second conductive member 60 extends out of the bottom of the wound structure and is bent and extends towards a direction approaching the bottom wall 121 of the bottom housing 12, and is electrically connected to the bottom wall 121 of the bottom housing 12. A welding point of the second conductive member 60 and the cylindrical wound structure and a welding point of the first conductive member 50 and the cylindrical wound structure are respectively located at two ends of the cylindrical wound structure in the second direction L. In this way, the second conductive member 60 and the first conductive member 50 can jointly support the electrode assembly 20 to alleviate the pulling imposed on the first conductive member 50 when the cylindrical wound structure wildly moves inside the housing 10, thereby further reducing incidence of an open circuit caused by breakage of stress-sensitive bent portions of the first conductive member 50. In some embodiments of this application, the second conductive member 60 may be made of at least one of Ni, Ti, Cu, Ag, Au, Pt, Fe, Co, Cr, W, Mo, Al, Mg, K, Na, Ca, Sr, Ba, Si, Ge, Sb, Pb, In, Zn, and a combination (alloy) thereof. For example, the second conductive member 60 may be made of copper foil.

In this embodiment of this application, experiments are conducted on electrochemical apparatuses of the same design system and same type.

### Comparative Example 1

A first conductive member was directly connected and fixed to an electrode assembly and a housing cover, and then the housing cover was fixed to a bottom housing without folding the first conductive member.

In this electrochemical apparatus, when the housing cover and the bottom housing were fitted, wrinkles were produced at a bent place formed by the first conductive member and the electrode assembly, which pushed up the housing cover and affected the yield rate of the connection between the housing cover and the bottom housing. Secondly, during the drum drop test of the electrochemical apparatus, the wrinkled bent place of the first conductive member was prone to tear/break during wild movement and rotation of the electrode assembly, causing the electrochemical apparatus to fail.

### Comparative Example 2

The difference from Comparative Example 1 is that the first conductive member was pre-folded after being led out from the electrode assembly, and then the housing cover was fixed to the bottom housing. The first conductive member satisfied L1 = 0.42 × L2, and |A1 - A2l ≠ |A3 - A4|.

L1 of the electrochemical apparatus was longer, so that the first conductive member occupied more space. As a result, it was likely to cause an electrolyte to overflow after the housing cover and the bottom housing were connected, affecting the connection yield rate of the housing cover. Secondly, a second bent portion was close to the connection place of the housing cover, and was likely to push up the housing cover under the action of the housing cover, which also affected the yield rate of the connection between the housing cover and the bottom housing.

### Comparative Example 4

The difference from Comparative Example 1 is that the first conductive member was pre-folded after being led out from the electrode assembly, and then the housing cover was fixed to the bottom housing. The first conductive member satisfied L1 = 0.32 × L2, and IA1 - A2l = |A3 - A4|.

In the electrochemical apparatus, after pre-folding, the second conductive segment overlapped with the third conductive segment, and the second bent portion was shorter and likely to wrinkle, meaning that the stress was more concentrated, and the rotation of the electrode assembly during the drum drop process was likely to tear a bent portion of the first conductive member. In addition, the second bent portion was closer to the connection place of the housing cover and the bottom housing was likely to push up the housing cover during assembly, affecting the yield rate of the connection between the housing cover and the bottom housing.

### Example 1

The difference from Comparative Example 1 is that the first conductive member was pre-folded after being led out from the electrode assembly, and then the housing cover was fixed to the bottom housing. The first conductive member satisfied L1 = 0.18 × L2, and |A1 - A2l # |A3 - A4|.

In the electrochemical apparatus, the first conductive member folded forms a buffer structure, which can alleviate the pulling imposed on the first conductive member by wild movement of the electrode assembly in the axial and radial directions during the drum drop test of the electrochemical apparatus, thereby reducing the risk of open circuits/short circuits of the electrochemical apparatus caused by tearing/breakage of the first conductive member at the bent place of the electrode assembly. In addition, |A1 - A2| ≠ |A3 - A4| means that longer crease of the second bent portion distributes the stress, and the bent place of the first conductive member was not likely to tear/break during the drum drop process.

### Example 2

The difference from Comparative Example 1 is that the first conductive member was pre-folded after being led out from the electrode assembly, and then the housing cover was fixed to the bottom housing. The first conductive member satisfied L1 = 0.37 × L2, and IA1 - A2l # |A3 - A4|.

**In** the electrochemical apparatus, the first conductive member folded forms a buffer structure, which can alleviate the pulling imposed on the first conductive member by wild movement of the electrode assembly in the axial and radial directions during the drum drop test of the electrochemical apparatus, thereby reducing the risk of open circuits/short circuits of the electrochemical apparatus caused by tearing/breakage of the first conductive member at the bent place of the electrode assembly. As compared with Example 1, the second bent portion was farther from the second subsection of the third conductive segment, and therefore the first conductive member had better pulling alleviation effects during the drum drop process.

### Example 3

The difference from Comparative Example 1 is that the first conductive member was pre-folded after being led out from the electrode assembly, and then the housing cover was fixed to the bottom housing. The first conductive member satisfied L1 = 0.32 × L2, and |A1 - A2l # |A3 - A4|.

In the electrochemical apparatus, the first conductive member folded forms a buffer structure, which can alleviate the pulling imposed on the first conductive member by wild movement of the electrode assembly in the axial and radial directions during the drum drop test of the electrochemical apparatus, thereby reducing the risk of open circuits/short circuits of the electrochemical apparatus caused by tearing/breakage of the first conductive member at the bent place of the electrode assembly. As compared with Example 1, the second bent portion was farther from the second subsection of the third conductive segment, and therefore the first conductive member had better pulling alleviation effects during the drum drop process. In addition, IA1 - A2| ≠ |A3 - A4| means that as compared with Comparative Example 4, the second bent portion was farther from the connection part of the housing cover and the bottom housing, and therefore was not likely to push up the housing cover to affect the connection of the housing cover.

Verification test 1: The housing cover and bottom housing of the battery were welded and assembled according to the schemes described in the comparative examples and examples, the welding yield rate was collected, the defective product was disassembled to observe a wound body position corresponding to a welding failure part. The test results are as shown in Table 1 below.

Verification test 2: The battery cell was charged to a charge limit voltage with a current of 0.18C at room temperature, and a drop test was performed with a fixture specific to battery cell drop test. A sample was grabbed with a mechanical arm to place it on a marble slab at a height of 1.8 m, and the sample was dropped three times in an order of housing cover facing down → housing bottom facing down → battery cell pole facing down. These three drops were one round. After each round of drop, whether the battery cell was damaged or leaked was observed, and the open circuit voltage of the battery cell was measured. If the voltage was less than 3.0 V, it was determined that the battery cell failed. If there was neither damage nor leakage, and the open circuit voltage was greater than 3.0 V, it was determined that the battery cell did not fail. The test continued until the battery cell failed, and the number of drops at the time of battery cell failure was recorded. Then the battery cell was disassembled to observe the failure type. Test results are shown in the following table 2.

Verification test 3: The battery cell was charged to a charge limit voltage with a current of 0.18C at room temperature, and a drum drop test was performed with a fixture specific to battery cell drum drop test. The battery cell was dropped from a height of 1 m for 500 circles at a speed of 5 circles/min (two drops was one circle). After every 50 circles of drum drop, whether the battery cell was damaged or leaked was observed, and the open circuit voltage of the battery cell was measured. If the voltage was less than 3.0 V, it was determined that the battery cell failed. If there was neither damage nor leakage, and the open circuit voltage was greater than 3.0 V, it was determined that the battery cell did not fail. The test continued until the battery cell failed, and the number of drops at the time of battery cell failure was recorded. Then the battery cell was disassembled to observe the failure type. Test results are shown in the following table 3.

**Table 1 Laser welding yield rate of bottom housing/housing cover and failure type**

| | **Characteristic** | **Welding yield rate** | **Failure type/reason of defective product** |
|---|---|---|---|
| Comparative Example 1 | The first conductive member was not folded. | 65.0% | Wrinkles were produced at the welding failure places: the first conductive member and the first bent portion of the electrode assembly and pushed up the housing cover, leading to poor welding. |
| Comparative Example 2 | L1 = 0.42 × L2, and \|A1 - A2l ≠ \|A3 - A4\| | 76.3% | Electrolyte overflow caused poor welding. |
| Comparative Example 3 | L1 = 0.32 × L2, and IA1 - A2l = \|A3 - A4\| | 89.3% | The second bent portion was close to the circular edge of the housing cover and bulged to push up the housing cover, leading to poor welding. |
| Example 1 | L1 = 0.18 × L2, and \|A1 - A2l ≠ \|A3 - A4\| | 99.2% | No failure within the specified test counts. |
| Example 2 | L1 = 0.37 × L2, and \|A1 - A2l ≠ \|A3 - A4\| | 99.1% | No failure within the specified test counts. |
| Example 3 | L1 = 0.25 × L2, and \|A1 - A2l ≠ \|A3 - A4\| | 99.3% | No failure within the specified test counts. |
| Example 4 | L1 = 0.32 × L2, and \|A1 - A2l ≠ \|A3 - A4\| | 99.1% | No failure within the specified test counts. |

See Table 1. When L1 < 0.37 x L2, the welding yield rate of the bottom housing/housing cover is high; and the welding yield rate in the case of |A1 - A2| ≠ |A3 - A4| is higher than that in the case of |A1 - A2| = |A3 - A4|.

**Table 2 Number of failed drops in drop test**

| **Group** | | **Characteristic** | **Average number of unfailed drops** |
|---|---|---|---|
| First group | Comparative Example 1 | No folding | 23 |
| | Comparative Example 2 | L1 = 0.42 × L2, and \|A1 - A2l ≠ \|A3 - A4\| | 66 |
| | Example 1 | L1 = 0.18 × L2, and \|A1 - A2\| ≠ \|A3 - A4\| | 60 |
| | Example 2 | L1 = 0.37 × L2, and \|A1 - A2l ≠ \|A3 - A4\| | 68 |
| | Example 3 | L1 = 0.25 × L2, and \|A1 - A2l ≠ \|A3 - A4\| | 61 |
| | Example 4 | L1 = 0.32 × L2, and \|A1 - A2l ≠ \|A3 - A4\| | 67 |
| Second group | Comparative Example 1 | No folding | 23 |
| | Comparative Example 4 | L1 = 0.32 × L2, and \|A1 - A2\| = \|A3 - A4\| | 44 |
| | Example 4 | L1 = 0.32 × L2, and \|A1 - A2l ≠ \|A3 - A4\| | 61 |

See Table 2. When L1 < 0.18 × L2, the number of failed drops is low, and the edge of the third conductive segment is prone to break. When |A1 - A2| ≠ |A3-A4|, the number of failed drops is low, and the folding place of the first conductive member is prone to break.

**Table 3 Pass rate in drum drop test**

| **Group** | | **Characteristic** | **Number of passes in drum drop test** |
|---|---|---|---|
| First group | Comparative Example 1 | No folding | 0/32 |
| | Comparative Example 2 | L1 = 0.42 × L2, and \|A1 - A2\| ≠ \|A3 - A4\| | 32/32 |
| | Example 1 | L1 = 0.18 × L2, and \|A1 - A2\| ≠ \|A3 - A4\| | 32/32 |
| | Example 2 | L1 = 0.37 × L2, and \|A1 - A2\| ≠ \|A3 - A4\| | 32/32 |
| | Example 3 | L1 = 0.25 × L2, and \|A1 - A2\| ≠ \|A3 - A4\| | 32/32 |
| | Example 4 | L1 = 0.32 × L2, and \|A1 - A2\| ≠ \|A3 - A4\| | 32/32 |
| Second group | Comparative Example 1 | No folding | 0/23 |
| | Comparative Example 3 | L1 = 0.32 × L2, and \|A1 - A2\| = \|A3 - A4\| | 14/32 |
| | Example 4 | L1 = 0.32 × L2, and \|A1 - A2\| ≠ \|A3 - A4\| | 32/32 |

See Table 3. It can be learned from the verification in the first group that when L1 < 0.18 × L2, the drum drop performance is poor. It can be learned from the verification in the second group that when |A1 - A2| = |A3 - A4|, the drum drop is prone to cause the bent portion of the first conductive member to break. In addition, the verification in the two groups also show that if the first conductive member is not pre-folded, the pass rate of the electrochemical apparatus in drum drop is very low.

**Table 4 Summary of results of verification items of comparative examples and examples**

| | **Characteristic** | **Welding yield rate** | **Average number of unfailed drops** | **Number of passes in drum drop** |
|---|---|---|---|---|
| Comparative Example 1 | No folding | 65.0% | 23 | 0/32 |
| Comparative Example 2 | L1 = 0.42 × L2, and \|A1 - A2\| ≠ \|A3 - A4\| | 76.3% | 66 | 32/32 |
| Comparative Example 3 | L1 = 0.32 × L2, and \|A1 -A2\| = \|A3 - A4\| | 89.30% | 44 | 14/32 |
| Example 1 | L1 = 0.18 × L2, and \|A1 -A2\| # \|A3 - A4\| | 99.2% | 60 | 32/32 |
| Example 2 | L1 = 0.37 × L2, and \|A1 - A2\| ≠ \|A3 - A4\| | 99.1% | 68 | 32/32 |
| Example 3 | L1 = 0.25 × L2, and \|A1 - A2\| ≠ \|A3 - A4\| | 99.3% | 61 | 32/32 |
| Example 4 | L1 = 0.32 × L2, and \|A1 -A2\| ≠ \|A3 - A4\| | 99.1% | 67 | 32/32 |

See Table 4. For the principle for the specific technical effects, refer to the foregoing description. It can be seen from the experimental results that Examples 1 to 4 have significantly better comprehensive effects than Comparative Examples 1 to 3 in terms of housing cover/bottom housing welding yield rate and drop & drum drop. Example 2 and Example 4 have better effects than other examples in terms of drop test.

In summary, the welding yield rate and safety of the electrochemical apparatus provided in some embodiments of this application can be significantly improved.

Referring to FIG. 19, this application further provides an electric apparatus. The electric apparatus includes the electrochemical apparatus 1 as described above. The electric apparatus 1 may be a consumer electronic product, such as a smart watch, wireless earphones, or a smart phone. It can be understood that in other embodiments, the electric apparatus may alternatively be an electric tool, an energy storage apparatus, a power apparatus, or the like. For example, the electric apparatus may alternatively be an electric vehicle.

The foregoing descriptions are merely embodiments of this application and are not intended to limit the patent scope of this application. Any equivalent structural or procedural transformations made by using the content of the specification and drawings of this application or any direct or indirect application in other related technical fields are included in the patent protection scope of this application in the same way.

## Claims

1. An electrochemical apparatus, **characterized by** comprising:
a housing, wherein the housing comprises a bottom housing and a housing cover, the bottom housing and the housing cover enclose a cavity, and the housing cover has a through hole communicating with the cavity;
an electrode assembly, wherein the electrode assembly is accommodated in the cavity;
an electrical connector, wherein the electrical connector is disposed in the through hole through an insulation layer; and
a first conductive member, wherein the first conductive member comprises a first conductive segment, a second conductive segment, and a third conductive segment, a first end portion of the first conductive segment is electrically connected to the electrode assembly, a first end portion of the second conductive segment is connected to a second end portion of the first conductive segment through a first bent portion, the third conductive segment is connected to a second end portion of the second conductive segment through a second bent portion, the third conductive segment is electrically connected to the electrical connector, and viewed from a first direction, the second conductive segment and the third conductive segment are partially separated, the first direction being a direction of opposite arrangement for the electrode assembly and the electrical connector.

2. The electrochemical apparatus according to claim 1, **characterized in that** the third conductive segment comprises a first subsection and a second subsection, a first end portion of the first subsection is connected to the second end portion of the second conductive segment through the second bent portion, a second end portion of the first subsection is connected to the second subsection through a third bent portion, and the second subsection is electrically connected to the electrical connector; and
viewed from the first direction, the first end portion of the first subsection at least partially overlaps with the second conductive segment, and a projection of the second end portion of the first subsection is partially separated from a projection of the second conductive segment.

3. The electrochemical apparatus according to claim 2, **characterized in that** length of the third conductive segment is L1, and length of the second conductive segment is L2, wherein L1 and L2 satisfy 0 < L1 < L2.

4. The electrochemical apparatus according to claim 3, **characterized in that** L1 and L2 satisfy 0.18 × L2 ≤ L1 < 0.37 × L2.

5. The electrochemical apparatus according to claim 4, **characterized in that** a virtual straight line crossing the second conductive segment and the first subsection is drawn in the first direction, length of a perpendicular line from a point at which the virtual straight line intersects with the second conductive segment to one end of the second conductive segment in a third direction is A1, length of a perpendicular line from a point at which the virtual straight line intersects with the second conductive segment to the other end of the second conductive segment in the third direction is A2, length of a perpendicular line from a point at which the virtual straight line intersects with the first subsection to one end of the first subsection in the third direction is A3, length of a perpendicular line from a point at which the virtual straight line intersects with the first subsection to the other end of the third conductive segment in the third direction is A4, and A1, A2, A3, and A4 satisfy |A1 - A2| ≠ |A3 - A4|, the third direction being perpendicular to the first direction.

6. The electrochemical apparatus according to claim 2, **characterized in that** length of the third conductive segment is L1, and length of the second conductive segment is L2, wherein L1 and L2 satisfy 0 < L2 < L1.

7. The electrochemical apparatus according to claim 2, **characterized in that** the second subsection has a connection zone connected to the electrical connector, and a projection of the connection zone in the first direction at least partially overlaps with the projection of the second conductive segment in the first direction.

8. The electrochemical apparatus according to claim 2, **characterized in that** the electrode assembly is a wound electrode assembly, and viewed from the first direction, the second conductive segment overlaps with a winding center of the electrode assembly.

9. The electrochemical apparatus according to claim 8, **characterized in that** viewed from the first direction, the first subsection overlaps with the winding center of the electrode assembly.

10. The electrochemical apparatus according to claim 8, **characterized in that** the second subsection overlaps with the winding center of the electrode assembly.

11. The electrochemical apparatus according to claim 8, **characterized in that** the second conductive segment, the first subsection, and the second subsection all overlap with the winding center of the electrode assembly.

12. The electrochemical apparatus according to claim 1, **characterized in that** a projection of the first conductive member in the first direction is at least partially located within a projection of the electrical connector in the first direction.

13. The electrochemical apparatus according to any one of claims 2 to 12, **characterized in that** the electrochemical apparatus satisfies at least one of the following conditions:
(1) a surface of the second conductive segment facing towards the electrode assembly and a surface of the third conductive segment facing towards the electrical connector are both connected to the second bent portion;
(2) viewed from the third direction, a shortest distance N1 between the second subsection and the electrode assembly in the first direction H and a shortest distance N2 between the second bent portion and the electrode assembly in the first direction H satisfy: 0 < N2 < N1, the third direction being perpendicular to the first direction; and
(3) viewed from the first direction, a shortest distance N3 between the first bent portion and a side wall of the bottom housing opposite to the first bent portion and a shortest distance N4 between the second bent portion and a side wall of the bottom housing opposite to the second bent portion satisfy: 0 < N4 < N3.

14. The electrochemical apparatus according to any one of claims 1 to 12, **characterized in that** the electrochemical apparatus further comprises a second conductive member, and the second conductive member is electrically connected to both the electrode assembly and the housing within the housing.

15. The electrochemical apparatus according to claim 14, **characterized in that** the electrical connector comprises a body portion and a protruding portion, the body portion is connected to a surface of the housing cover facing towards the outside through the insulation layer, and the protruding portion penetrates into the through hole and extends into the through hole to be electrically connected to the third conductive segment.

16. The electrochemical apparatus according to claim 15, **characterized in that** the electrochemical apparatus further comprises a first insulation member, and the first insulation member is attached to a surface of the third conductive segment facing towards the cavity; and
the third conductive segment has a connection zone connected to the electrical connector, wherein a projection of the connection zone in the first direction is located within a projection of the first insulation member in the first direction.

17. The electrochemical apparatus according to any one of claims 1 to 12, **characterized in that** the electrochemical apparatus further comprises a second insulation member, and the second insulation member covers a surface of the first conductive member.

18. The electrochemical apparatus according to any one of claims 1 to 12, **characterized in that** the insulation layer is disposed around the through hole, and in the first direction, a projection of the insulation layer in the first direction is larger than the projection of the first conductive member in the first direction.

19. An electric apparatus, comprising the electrochemical apparatus according to any one of claims 1 to 18.
